# EUROPEAN PATENT SPECIFICATION

(11) **EP 1 817 177 B1**
(45) Date of publication and mention of the grant of the patent: **24.08.2011**
(21) Application number: 04791926.1
(22) Date of filing: 27.10.2004
(51) Int. Cl.: B60C 1/00, B29D 30/30, B29D 30/52

(54) **PNEUMATIC TYRE FOR VEHICLE, METHOD AND APPARATUS FOR ITS MANUFACTURE.**
LUFTREIFEN FÜR FAHRZEUG, VERFAHREN UND VORRICHTUNG ZU SEINER HERSTELLUNG
PNEUMATIQUE POUR VEHICULE, PROCEDE ET DISPOSITIF DE CONFECTION

(43) Date of publication of application: 15.08.2007
(73) Proprietor: PIRELLI TYRE S.p.A., 20126 Milano (IT)
(72) Inventor: LO PRESTI, Gaetano, 20126 Milano (IT); NOTO, Rodolfo, 20126 Milano (IT); DE GESE, Ignazio, 20126 Milano (IT); POZZATI, Giovanni, 20126 Milano (IT); LOPREVITE, Massimo, 20126 Milano (IT)
(74) Representative: Tansini, Elio Fabrizio
(86) International application number: PCT/IT2004/000592
(87) International publication number: WO 2006/046259

(56) References cited:
- EP-A- 0 685 352
- EP-A- 0 970 797
- EP-A- 1 279 486
- EP-A- 1 454 732
- DE-A1- 2 160 337
- DE-B- 1 228 525
- US-A- 4 698 245
- US-A- 5 211 898
- US-A- 5 221 406
- US-A- 5 526 862
- US-B1- 6 458 446
- PATENT ABSTRACTS OF JAPAN vol. 2002, no. 06, 4 June 2002 (2002-06-04) -& JP 2002 046194 A (BRIDGESTONE CORP), 12 February 2002 (2002-02-12)

## Description

The present invention relates to a pneumatic tyre for vehicle wheels having a tread band and/or sidewalls and/or other structural elements made up of portions of different blends of elastomer material.

It is a further object of the invention to provide a method of manufacturing said tyre.

A tyre for vehicle wheels generally comprises a carcass structure including at least one carcass ply formed of reinforcing cords incorporated into an elastomer matrix. The carcass ply has end flaps in engagement with annular anchoring structures respectively, that are located at the regions currently identified as "beads", each of them being usually formed of a substantially circumferential annular insert to which at least one filling insert is applied, at a radially external position.

Associated with the carcass ply, at a radially external position, is a belt structure comprising one or more belt layers, disposed in radial superposed relationship with each other and having textile or metallic reinforcing cords with a crossed orientation and/or substantially parallel to the circumferential extension direction of the tyre. A tread band is applied to the belt structure, at a radially external position; said tread band too is of elastomer material like other constituent structural elements of the tyre. To the aims of the present description it is to be pointed out that by the term "elastomer material" it is intended a composition comprising at least one elastomeric polymer and at least one reinforcing filler. Preferably, this composition further comprises additives such as a cross-linking agent and/or a plasticizer. Due to the presence of the cross-linking agent, this material can be cross-linked through heating so as to form the final article of manufacture.

In addition, respective sidewalls of elastomer material are applied to the side surfaces of the carcass structure, each extending from one of the side edges of the tread band until close to the respective annular anchoring structure to the beads.

In tyres of the "tubeless" type, the carcass ply is fully coated with a layer of butyl-based elastomer material, usually referred to as "liner", having optimal airtightness features and extending from one bead to the other.

In tyres of the run flat type or for other particular uses, the carcass structure can be also provided with auxiliary reinforcing inserts of elastomer material, located at an axially internal position to each of the sidewalls. These auxiliary inserts, usually called "sidewall inserts", lend themselves to support the load transmitted to the wheel in case of accidental deflation of the tyre, to allow the vehicle to go on running under safety conditions.

The sidewalls, tread band, possible auxiliary inserts, liner and/or any other structural element of elastomer material integrated into the tyre structure are usually made of blends of materials that are different from each other, each of them being selected depending of the specific operating features required for the respective structural element.

US 6,279,633 proposes manufacture of the sidewalls using an EPDM-based (EPDM = a non-conjugated ethylenepropylene-diene terpolymer) elastomer material containing a siliceous reinforcing filler, to obtain a good resistance to ageing and the possibility of giving the sidewalls a desired colour.

Document US 2004/0103974 teaches how to apply Labels of natural rubber containing until 50% of pigments of titanium dioxide to the tyre sidewalls or the tread, in order to reproduce inscriptions and/o r tyre identification codes thereon.

In documents US 2003/0127170 and WO 01/94453 use of a surface treatment based on a polyurethane water dispersion is proposed to improve the resistance to ageing of the elastomer material constituting the sidewalls.

EP 0 105 822 discloses a tyre the tread band of which contemplates a plurality of layers in which the outer layers have properties of resistance to wear and tearing, whereas the inner layers have a good behaviour to heating.

US 6,598,646 proposes arranging of the cords of the carcass ply between different covering layers of elastomer material, in which the only layer facing the inside of the tyre is made of butyl rubber to avoid early separation of the tyre components from the carcass ply.

US 4,704,176 proposes improving of the adhesion between a polyurethane blend and a blend based on natural rubber and styrene/butadiene copolymers that are used to make the tyre tread and carcass respectively or vice versa, by applying a surface coating to the cured rubber, which coating consists of a graft polymer based on metylmethacrylate/natural rubber on which a polyurethane reaction blend in a liquid state, which will be submitted to vulcanisation, is subsequently distributed to create a bond with the subsequently applied components based on a polyurethane blend.

EP 0685352 and DE 1228525 disclose a tyre with a tread band having a radially inner part and a radially outer part, each shaped with an undulated surface and mutually joined according to an undulated interface profile in correspondence of the respectively mating undulated surfaces.

Similarly, DE 2160337 discloses a tyre with a sidewall having an axially inner part and an axially outer part, mutually joined according to an undulated interface profile.

JP 2002046194 teaches feeding a ribbon-shaped rubber which is spirally wound onto a rotating support, so as to form a first layer. Then, the same ribbon-shaped rubber is spirally wound around the first layer, so as to form a second layer radially superimposed on the first layer.

Document EP 0 970 797 teaches feeding a band-shaped uncured rubber material which is helically wound onto a rotating support, so as to form a layer of said first uncured rubber material. In order to reliably join together a first and a third layer made of different rubber materials having little mutual compatibility, provision is made of an intermediate second layer made of a compound of the different materials mixed together.

The Applicant has ascertained that selection of the materials for the manufacture of the different structural tyre elements is conditioned by the difficulties that can arise for obtaining an efficient and reliable union between the different elastomer materials. In particular the polymeric bases used in the different materials can be little compatible with each other, due for example to the insufficient degree of co-crosslinking, which impairs reliability and duration of the components made with said materials.

The Applicant has perceived that through use of links or constraints of the mechanical type between the components a stable union between structural elements made of elastomer materials different from each other is made possible, even when said materials are not sufficiently co-crosslinkable.

The Applicant therefore has found that if the structural tyre elements are such made that a mechanical engagement between the contacting surfaces can be obtained, blends that are chemically non-compatible or not sufficiently co-crosslinkable can be mutually coupled in a very reliable and durable manner, because the forces tending to separate the different components, due both to the inflating pressure and to forces transmitted to the tyre during use, are counteracted by the constraining reactions generated between the contact surfaces of the different components, as a result of said mechanical engagement.

More specifically, in accordance with the present invention the different materials required for manufacturing a desired structural element are set in the form of a continuous elongated element and mutually coupled before or during winding of said element on a forming support, so as to obtain a layered coating in which the materials are mutually joined according to an undulated interface profile defining complementary elements of mechanical engagement between the components themselves.

In a first aspect, the invention relates to a pneumatic tyre for vehicle wheels, as claimed in claim 1.

In a further aspect, the invention relates to a method of manufacturing a tyre for vehicle wheels, as claimed in claim 17.

In a further aspect the invention relates to an apparatus for manufacturing pneumatic tyres for vehicle wheels as claimed in claim 46. Preferred embodiments of the invention are defined in the dependent claims.

Further features and advantages will become more apparent from the detailed description of a preferred, but not exclusive, embodiment of a pneumatic tyre for vehicle wheels, the related manufacturing method and the manufacturing apparatus in accordance with the present invention.

This description will be taken hereinafter with reference to the accompanying drawings, given by way of non-limiting example, in which:
- Fig. 1 diagrammatically shows a tyre for vehicle wheels in accordance with the invention, in a fragmentary diametrical section;
- Fig. 2 is a fragmentary cross-section to an enlarged scale of a structural element of the tyre in Fig. 1;
- Fig-. 3 laterally shows a scheme of the simultaneous laying of a first and a second elongated elements on a forming support, for the purpose of manufacturing a structural element of the tyre in reference;
- Fig. 3a laterally shows a scheme of the simultaneous laying of a first and a second elongated elements on a forming support, in accordance with a possible alternative embodiment;
- Fig. 3b laterally shows a scheme of the simultaneous laying of a first and a second elongated elements on a forming support, in accordance with a further alternative embodiment;
- Fig. 4 is a diagrammatic cross-section view of a continuous strip-like element obtainable from mutual coupling of the first and second elongated elements, close to the plane denoted by line IV-IV in Fig. 3;
- Fig. 5 shows, by way of example, a scheme of laying the continuous strip-like element in the form of coils disposed close to each other, to obtain a structural element as seen in Fig. 2;
- Fig. 6 is a diagrammatic cross-section view of a continuous strip-like element obtainable from coupling of a first and a second elongated elements in a triangular conformation, according to a possible alternative embodiment of the invention;
- Fig. 7 is a fragmentary section view of a scheme of laying the continuous strip-like element seen in Fig. 6 in the form of coils disposed close to each other.

With reference to the drawings, a pneumatic tyre for vehicle wheels in accordance with the present invention has been generally identified with reference numeral 1.

In the present specification and in the appended claims by "structural element" of the tyre it is intended any tyre part made of elastomer material such as the tread band, sidewalls, sidewall inserts, fillers, liner and/or under-liner, or a portion thereof, or also the assembly formed of two or more of said parts or portions thereof.

Tyre 1 essentially comprises a carcass structure 2 of a substantially toroidal conformation, and structural elements of elastomer material 5, 28, 29, 30 associated with the carcass structure 2, as better described in the following. In more detail, the carcass structure 2 may for example comprise a pair of annular anchoring structures 3, integrated into the regions usually identified as "beads" and each, for example, consisting of at least one substantially circumferentiaL annular insert 4, currently referred to as "bead core" and formed of one or more rubber-coated cords or equivalent reinforcing thread elements incorporated in an elastomer matrix. An elastomer filler 5 can be applied to the bead core 4, at a radially external position. In engagement with each of the annular anchoring structures 3 are the end flaps 6a of at least one carcass ply 6 comprising textile or metallic rubber-coated cords or equivalent reinforcing thread elements incorporated in an elastomer matrix and extending transversely of the circumferential extension of tyre 2, possibly following a predetermined inclinat ion, from one of the annular anchoring structures 3 to the other. In tyres of the "tubeless" type, i.e. without an air tube, the carcass structure 2 has a layer of substantially airtight elastomer material generally referred to as "liner" (not shown) at a radially internal position.

Usually associated with the carcass structure 2 are also one or more belt layers 7a, 7b comprising metallic or textile rubber-coated cords, or equivalent reinforcing thread- elements incorporated in an elastomer matrix, suitably inclined to the circumferential extension of the tyre preferably following crossed orientations between a belt layer and the other, as well as a possible outer belting layer (not shown) comprising one or more cords circumferentially wounds into coils disposed in axial side by side relationship around the belt layers 7a, 7b. The assembly of the belt layers 7a, 7b and the possible outer belting layer defines a so-called belt structure generally denoted at 7, of substantially cylindrical annular conformation, applied to the carcass structure 3 at a radially external position. To the aims of the present specification and the appended claims, the belt structure 7, while described as a distinct component, is considered (when not expressly stated in a different manner) as an integral part of the carcass structure 2.

Further associated with the carcass structure 3 is a tread band 28 circumferentially applied to the belt structure 7 at a radially external position, and a pair of sidewalls 29 laterally applied to the carcass structure 2, on opposite sides.

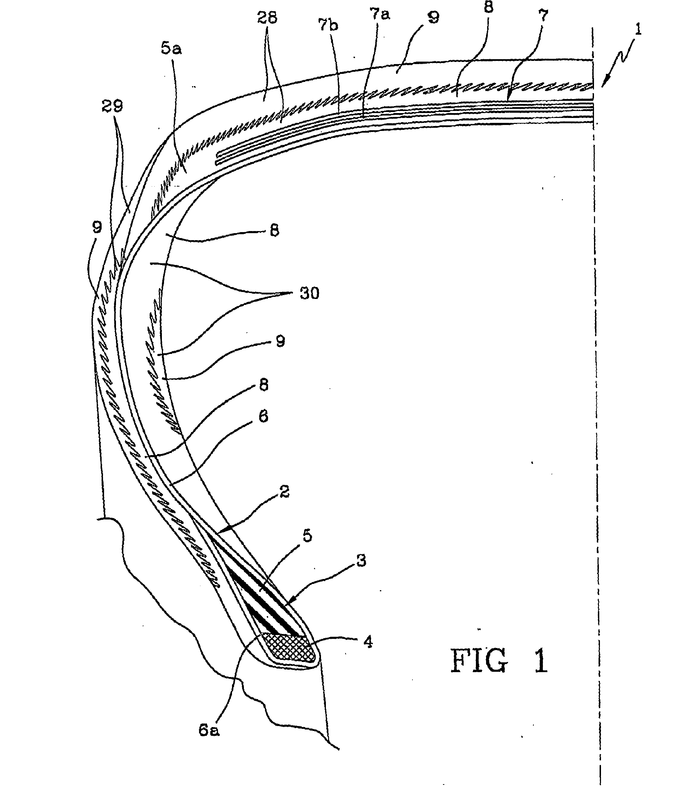

In run flat tyres or tyres intended for particular uses, auxiliary support inserts 30, of the so-called "sidewall insert" type for example, can be also provided; they are applied either close to the sidewalls 29 internally of the carcass ply 6, as shown by way of example in Fig. 1, or between two paired carcass plies or also at a position axially external to the carcass structure 2.

Tyre 1 lends itself to be manufactured by a manufacturing apparatus essentially comprising devices designed to form the carcass structure 2 and devices for associating with the carcass structure 2, the tread band 28, sidewalls 29, possible auxiliary inserts 30, said liner and/or other structural elements of elastomer material co-operating in forming tyre 1.

In the accompanying drawings, reference numeral 31 denotes a unit for manufacturing structural elements, which unit is part of the devices for associating the structural elements of elastomer material with the carcass structure 2. The other components of the apparatus are not shown, because they can be made in any convenient manner.

For example, the devices for manufacturing tyre 1 may usually comprise a manufacturing line (not shown), in which the carcass structures 2 are obtained, for example, through assembling of carcass plies 6, anchoring structures 3 and/or other parts consisting of semifinished products coming from preceding work and storage steps. Assembling of said parts can be carried out on a so-called "building drum" of the "unistage" type suitable for manufacturing tyres according to a known process currently referred to as "unistage process"; or said assembling can take place on a so-called "first-stage" drum operating in combination with a so-called "shaping drum" suitable for manufacturing tyres according to a known process currently referred to as "two- stage process".

Usually combined with the manufacturing line is a belt-forming line comprising devices for making the belt layer or layers 7a, 7b, and devices for transferring the belt structure 7 to a coaxially centred position on the unistage drum or the shaping drum so as to associate the belt structure 7 at a radially external position with the carcass structure 2 when the latter, first made in the form of a cylindrical sleeve, is shaped into a toroidal configuration.

Alternatively, the carcass structure 2 and/or the respective belt structure 7 can be formed on at least one forming support that, through one or more robotized arms or other suitable devices, is sequentially brought to interact with one or more work stations located along the manufacturing line, to directly form on the forming support itself, the carcass ply 6, annular anchoring structures 3, belt layers 7a, 7b and/or other constituent elements of tyre 1 through laying of elementary components such as rubber-coated cords, strips of rubber-coated cords and/or elongated elements of elastomer material, as described for example in document US 6,457,504 in the name of the same. Applicant.

The structural elements of elastomer material in tyre 1, such as the tread band 28, sidewalls 29, auxiliary inserts 30, liner, or at least one of them, are preferably made by winding at least one continuous strip-like element of elastomer material into contiguous circumferential coils around a forming support 18, as described in document WO2004/041522 in the name of the same Applicant, for example.

The forming support 18 can consist of a rigid drum conforming in shape to the inner surface extension of the tyre or having another selected configuration depending on the geometrical features of the structural element to be obtained. Alternatively, the forming support 18 can be represented by the carcass ply 6 possibly in turn disposed on a rigid drum, or by other component of the carcass structure 2, such as the belt structure 7, previously associated with the carcass structure 2 itself or not.

In more detail, the liner, possible auxiliary inserts 30 and/or other structural elements disposed at the inner surfaces of tyre 1, or to be applied to the carcass structure 2 at a second time, can be directly made on a forming support 18 in the form of a rigid drum. Other structural elements such as the sidewalls 29 can be directly made against the side surfaces of the carcass ply 6. The tread band 28 can in turn be made at a radially external position to the carcass structure 2 and more specifically on the belt structure 7, before or after assembling of said belt structure with the carcass structure 2.

In a preferred embodiment, at least one of the structural elements 5, 28, 29, 30 of elastomer material can be made with the aid of the above mentioned unit 31.

More specifically, each structural element 5, 28, 29, 30 can consist of at least one first component 8 of a first elastomer material, and one second component 9 of a second elastomer material different from the first elastomer material. The first and second components 8, 9 are advantageously coupled at an undulated interface profile 10 defining mechanical-engagement elements 10a between said two components 8, 9.

In a preferential embodiment, the first elastomer material composing component 8 consists of a blend based on natural rubber or in any case a blend co-crosslinkable with the elastomer matrix used in making the carcass structure and/or the belt layers.

The second elastomer material constituting the second component 9 can in turn consist of a material having any composition adapted to give the component the desired properties.

For example, in manufacturing the sidewalls 29, the second component 9 located at an axially external position to the first component, can advantageously consist of a polymeric base comprising ethylenepropylene-diene (EPDM) rubbers, polyurethane rubbers, butyl rubbers or mixtures thereof, so as to achieve satisfactory properties of resistance to ageing, easy capability of also printing coloured inscriptions, brightness or other desired features in surface appearance.

In the support inserts 30, on the contrary, the second component 9 axially positioned internally of the first component can advantageously comprise a butadiene rubber-based blend, so as to achieve satisfactory properties of resistance to fatigue and low hysteresis.

With reference to the manufacture of the tread band 28, should the carcass structure 2 be made with use of an airtight elastomer material, of a butyl rubber-based blend for example, the first elastomer material composing component 8, located at a radially internal position, can use a butyl rubber-based blend too, or in any case a blend co-crosslinkable with the elastomer matrix used in manufacturing the carcass structure 2 (and/or the belt layers 7a, 7b).

The second elastomer material constituting the second component 9, placed at a radially external position to the first component, can advantageously consist of a blend based on a natural or synthetic rubber (polybutadiene or butadiene-styrene copolymers) so as to ensure satisfactory qualities of roadholding and resistance to abrasion.

The liner could be made in the same manner, i.e. making the first radially internal component 8 with an airtight blend, based on butyl rubber for example, and the second component 9 that in this case would form the so-called under-liner, with a compatible blend, i.e. a blend adapted to be co-crosslinked with the blend used for the remaining part of the carcass structure radially and axially external to the liner/under-liner assembly.

It can be seen that in this way any problem resulting from the difficulty of joining blends different from each other in a stable and reliable manner is overcome, even if these blends are little compatible with each other in terms of creation of chemical cross-linking bonds.

Thus, in making each structural element of tyre 1 it is possible to use the most appropriate materials for obtaining the desired physical and operational features, without impairing the anchoring stability of the different components during use.

As shown in Fig. 1, the first component 8 can advantageously extend over the whole extension of the respective component as shown by way of example with reference to the tread band 28, even if it is also possible for the second component 9 to extend limitedly to a desired surface portion of the first component 8, as shown in connection with the sidewalls 29 and auxiliary inserts 30.

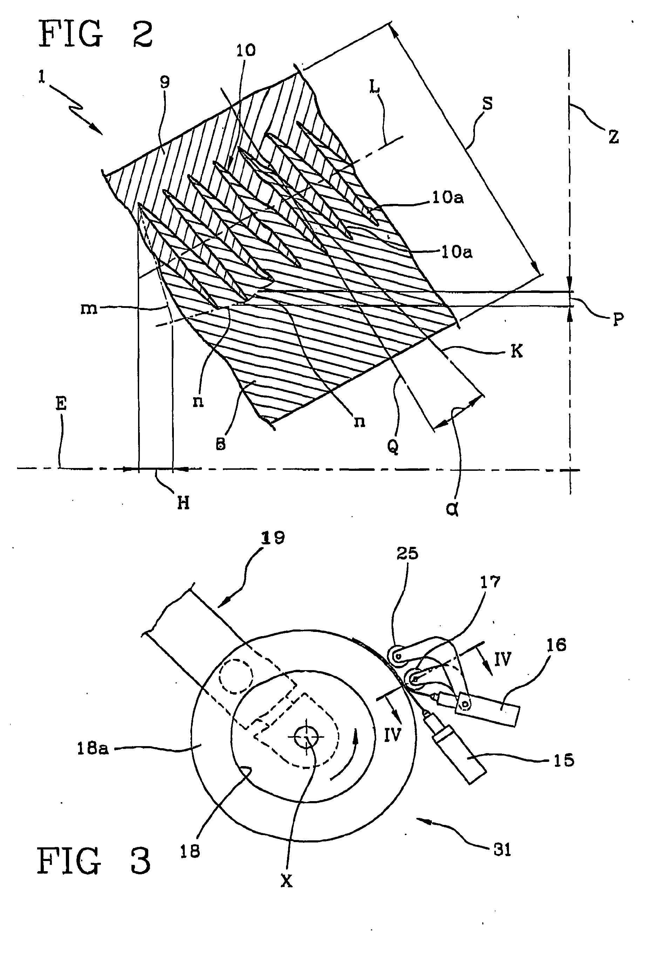

As shown in Fig. 2, in the undulated interface profile 10 it is possible to identify a wave pitch P and a wave height H. Within the present specification and the appended claims, by the term wave "pitch" of the interface profile it is intended the distance P measured in an axial direction in right section between the median points of two consecutive waves. In the context of the present definition, the median point of each wave is the mean point of segment "n" joining the opposite radially inner ends of said wave. In Fig. 2 the line Z on which value P is indicated is parallel to the geometric rotation axis X of the forming support 18 and therefore represents the axial direction. Here and in the following of the specification and in the claims the radial direction E is indicated perpendicularly to line Z.

Finally, in the present specification and in the following claims by "height" of each wave of said interface profile it is intended the projection H on a plane parallel to the equatorial plane (that in the embodiment shown is coincident with the radial direction E) of the forming support 18, of a segment "m" extending in a right-section plane perpendicularly to segment "n" joining said, radially inner wave ends, or to the extension of the segment itself, between said segment or the segment extension and the radially outermost point of the wave.

To achieve an efficient mechanical engagement between components 8 and 9, the wave height H is preferably equal to or higher than one tenth of, and preferably higher than half the wave pitch P, so as to obtain effective mechanical-engagement elements 10a also in the absence of undercuts.

In the embodiment shown in Fig. 2, the wave height H is as high as about two times the value of the wave pitch P.

It can be also advantageously provided for the waves defining the undulated profile 10 to have an extension, identifiable by the bisecting line K of the vertex of each wave, which is inclined to a direction Q normal to a median line L of the extension of the undulated profile itself, even to a greater extent than as shown in Fig. 2. More specifically, in accordance with a preferred embodiment, to provide a particular mechanical engagement, the inclination angle α included between said bisecting line K and the perpendicular Q to the median line L is in the range of about 30° to about 88°, and more preferably between about 60° and about 85°.

A suitable value of the inclination angle α, among other things, allows an efficient coupling between the first and second components to be ensured even when the structural element of which they are part has a very restricted extension.

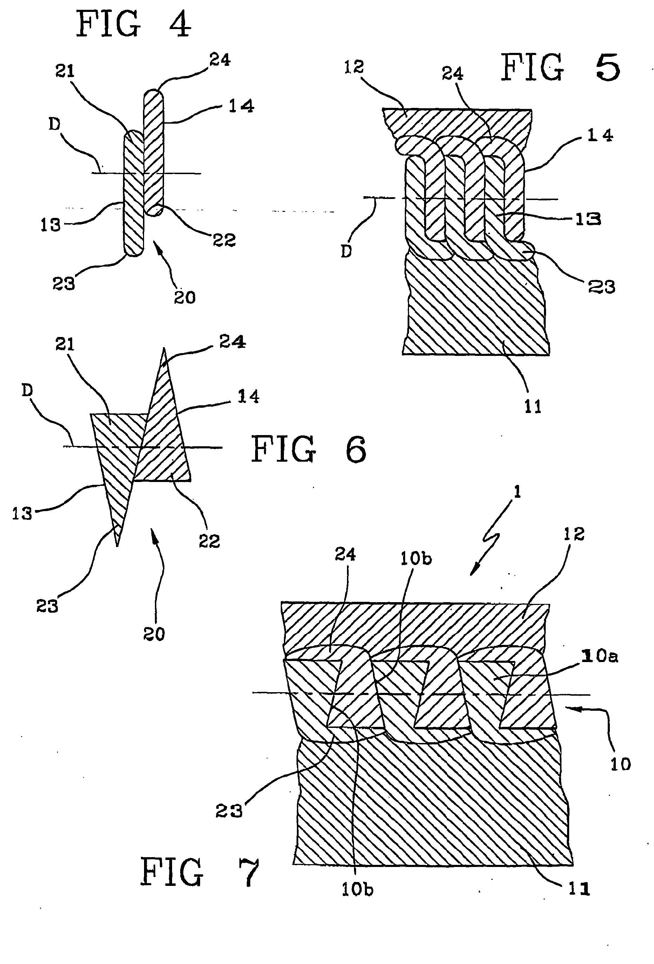

In addition or as an alternative to th e above description, the complementary mechanical-engagement elements 10a defined by the interface profile 10 may be provided to have portions 10b of mutual undercut constraint, as shown in Fig. 7.

As viewed from Figs. 5 and 7, a third component of elastomer material 11 may be further provided, said component being disposed at a radially internal position to the first component 8 and being co-crosslinked with the elastomer material forming the first component.

If required, a fourth component of elastomer material 12 may be also arranged at a position radially external to the second component 9, said fourth component being cross-linked with the elastomer material belonging to at least the second component itself.

Manufacture of each structural element 28, 2 9, 30 by unit 31 involves preparation of a first elongated element 13 and a second elongated element 14 made of the first and second raw elastomer materials, respectively. The first and second elongated elements, obtained by extrusion and fed from a first 15 and a second 16 extruders respectively, or other feeding members, are guided to at least one roller 17 or other member carrying out laying of them on a deposition surface 18a of the forming support 18. The forming support 18 is preferably supported by a robotized arm 19 only partly shown as it is already known from document WO 00/35666 A1 in the name of the same Applicant. The robotized arm 19 is equipped with a motor or other rotatory driving devices giving the forming support 18 a circumferential-distribution rotatory motion around the geometric rotation axis X thereof, by - effect of which a circumferential distribution of the elongated elements 13, 14 laid by the feeding roller 17 on the deposition surface 18a is caused. Simultaneously, translational driving devices associated with the robotized arm 19 move the forming support 18 in front of the feeding roller 17 with controlled relative displacements of transverse distribution, so that the first and second elongated elements 13, 14 are laid on the deposition surface 18a in the form of coils wound around the geometric axis X of the forming support 18.

On coming out of the respective extruders 15, 16, the first and second elongated elements 13, 14 are guided, by effect of the feeding roller 17 or other suitable members, in mutually converging directions towards a point of mutual coupling in which the elongated elements themselves meet and adhere to each other forming a continuous strip-like element 20 that is laid and distributed on the forming support 18 as above described.

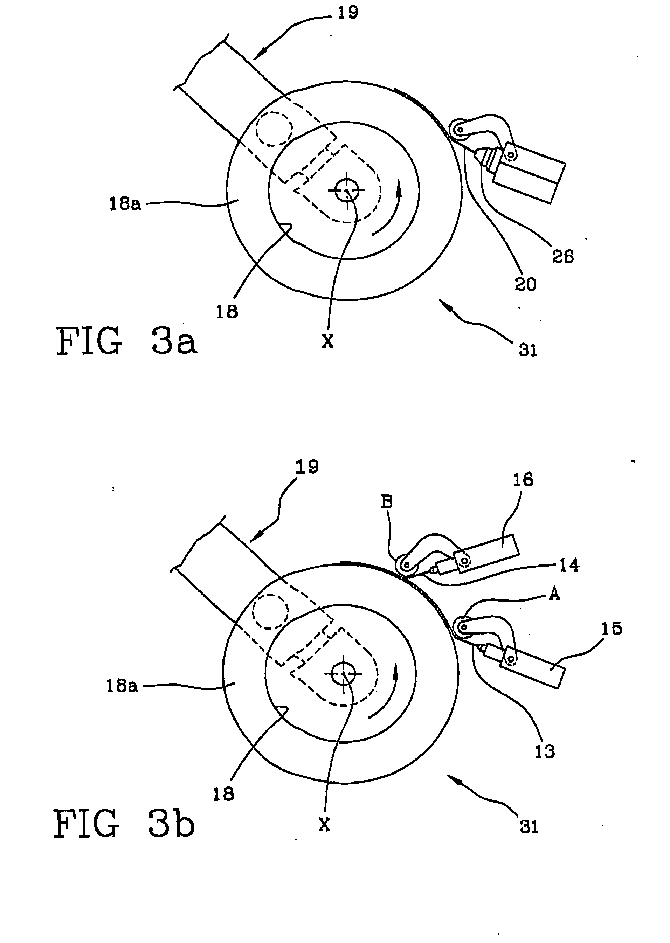

In the example in Fig. 3, the coupling point of the elongated elements 13, 14 is coincident with the application of same to the forming support 18 by the feeding roller 17. However said elongated elements 13, 14 can be also guided in such a manner as to cause coupling of same at a point upstream of the forming support 18. It may be also provided that the continuous strip-like element 20 should come from a supply reel, used in a storage step of the strip-like element itself after carrying out mutual coupling of the elongated elements 13, 14.

In a further alternative embodiment, the elongated elements 13, 14 can-be co-extruded and directly coupled in the extrusion head of a single extruder 26 (Fig. 3a) so that the strip-like element 20 is directly generated at the extruder outlet.

Finally, in a different embodiment shown by way of example in Fig. 3b, the elongated elements 13, 14 can be simultaneously laid on the forming support 18 at points A, B that are mutually spaced apart in a circumferential direction. In this ins tance, the coupling point between the elongated elements is coincident with the application point of the second elongated element 14 onto the forming support 18.

As can be viewed from Figs. 4 and 6, the elongated elements 13, 14 are mutually coupled in such a manner that, when coupling has occurred, each of them has a base portion 21, 22 in contact with the base portion of the other elongated element. In addition, at least one of the elongated elements 13, 14 may have an apex 23, 24 projecting from the base portion 21, 22, in a direction transverse to the direction of mutual alignment of the base portions themselves, denoted at D in said figures.

In more detail, in a preferential embodiment the elongated elements 13, 14 that can have a conformation substantially identical with each other, are coupled at mutually offset positions in a plane transverse to the mutual alignment direction D of the base portions 21, 22, so that each of them has a respective apex 23, 24 projecting in the opposite direction with respect to the apex of the other elongated element.

During laying on the forming support 18, the mutual positioning of the elongated elements 13, 14 and/or orientation of the continuous strip-like element 20 formed by them is controlled in such a manner that, on coming close to the deposition surface 18a, the apex 23 of the first elongated element 13 is turned towards the forming support 18.

As can be clearly seen looking at Figs. 5 and 7, apex 23 of the first elongated element 13 during application is deformed and it consequently bends towards the base portion 22 of the second elongated element 14, taking an interposed position between the second elongated element 14 and the forming support 18 so as to avoid a direct contact of the second elastomer material against the deposition surface 18a. At the deposition surface 18a, the coils disposed consecutively in side by side relationship and formed by the first elongated element 13, by effect of bending of apex 23 as above described, give rise to a continuous layer made up of the elastomers material, that extends over the whole deposit ion surface 18a.

Apex 24 of the second elongated element 14, in turn, is oriented radially away from the deposition surface 18a exhibited by the forming support 18 and can be turned up against the base portion 21 of the first elongated element 13, so that the coils in side by side relationship formed by the second elongated element 14 cause formation of a continuous layer made up of the second elastomer material.

If required, turning up of apex 24 of the second elongated element 14 can be assisted by a roller or other auxiliary applicator member 25, operating downstream of the feeding roller 17.

Furthermore, following deposition in the form of coils in side by side relationship, the base portions 21, 22 of the first and second elongated elements 13, 14 generate the interface profile 10 between the first and second components.

If required, application of the first and second elongat ed elements 13, 14 can be preceded by application of the third component 11 made of the same blend as that of the elongated element 13 or, in any case, a blend co-crosslinkable with the first elastomer material forming the first elongated element 13. Formation of this third component can take place in the same manner as previously described with reference to laying of the continuous strip-like element 20, i.e. through application of a continuous elongated element of elastomer material coming from an extruder for example and formed into coils disposed consecutively in side by side relationship to cover the deposition surface 18a of the forming support 18.

Subsequently to laying of the first and second elongated elements 13, 14, application of the above mentioned fourth component 12 may be also carried out, said component being made of a material co-crosslinkable with the second elastomer material forming the second elongated element 14. Formation of the fourth component 12 too can be carried out by applying onto the forming support 18, a fourth elongated element of elastomer material corning from an extruder and formed into coils disposed consecutively in side by side relationship. The third and fourth elongated elements can be advantageously produced either by the same extruders 15, 16 used for formation of the first and second elongated elements 13, 14, or by specific extruders dedicated thereto.

In the presence of the third and/or fourth elastomer components 11, 12, arrangement of apices 23, 24 projecting from the first and second elongated elements 13, 14 respectively may appear to be superfluous, as said third and fourth components can be co-crosslinkable with the material forming the base portions 21, 22 of the elongated elements 13, 14, respectively.

As shown in Fig. 5, the elongated elements 13, 14 can have a conformation with a substantially flattened cross-section. In this case an interface profile 10 as shown in Fig. 2 is preferably obtained, in which the wave height H is greatly higher than the wave pitch, so that the hills and valleys of the undulated profile will cause formation of the mechanical-engagement elements. Alternatively, as exemplified in Figs. 6 and 7, the elongated elements 13, 14 can advantageously have a cross-section profile of triangular conformation. In this case the base portions 21, 22 of the coupled elongated elements 13, 14 give rise to formation of portions 10b with an undercut constraint, in the mechanical-engagement elements 10a. The same effect is achieved using elongated elements 13, 14 having a trapezoidal cross-section profile.

When formation of the structural elements 28, 29, 30 co-operating in the manufacture of tyre 1 together with the carcass structure 2, has been completed, the tyre itself lends itself to be introduced into a mould to be submitted to a moulding and vulcanisation step that can be carried out in any convenient manner.

It will be finally appreciated that union between the different materials is obtained without requiring use of chemical treatments that would increase the working time and costs and would involve use of polluting substances.

In addition, the tyre in reference lends itself to be made in a simple and cheap manner, utilising machinery and equipment already provided in modern tyre-production cycles in which the structural elements of elastomer material are obtained by winding up elongated elements of raw elastomer material into coils disposed in side by side relationship on a forming support, as described in document WO 00/35666 A1 in the name of the same Applicant.

## Claims

1. A pneumatic tyre for vehicle wheels, comprising:
- a carcass structure (2) including reinforcing thread elements incorporated in an elastomer matrix;
- structural elements of elastomer material (28, 29, 30) associated with said carcass structure (2);
wherein at least one of said structural elements (28, 29, 30) comprises:
- at least one first component (8) formed of a first elastomer material,
- and at least one second component (9) formed of a second elastomer material different from said first elastomer material;
wherein said first and second components (8, 9) have an undulated interface profile (10);
wherein said interface profile (10) defines mechanical-engagement elements (10a) between the first and second components (8,9) ,
**characterized in that** said undulated interface profile (10) comprises a continuous strip-like element (20) extending around the geometric axis (X) of the tyre according to circumferential coils in side by side relationship,
wherein said continuous strip-like element (20) comprises a first and a second elongated elements (13, 14) mutually coupled along their longitudinal extension.

2. A tyre as claimed in claim 1, wherein a tread band (28) applied to the carcass structure (2) at a radially external position has said second component (9) disposed at a position radially external to said first component (8).

3. A tyre as claimed in claim 1 or 2, wherein a pair of sidewalls (29) is applied to the carcass structure (2) at laterally opposite positions, at least one of said sidewalls (29) having said second component (9) disposed in a position axially external to the first component (8).

4. A tyre as claimed in one or more of the preceding claims, wherein a pair of auxiliary support inserts (30) is associated with the carcass structure (2), at least one of said auxiliary inserts (30) having said second component (9) disposed in a position axially external to the first component (8).

5. A tyre as claimed in one or more of the preceding claims, wherein a liner and an under-liner are applied to the carcass structure (2) at a radially internal position, said under-liner comprising said second component (9) at a radially external position to said first component (8) forming said liner.

6. A tyre as claimed in one or more of the preceding claims, wherein the interface profile (10) has a wave height (H) and a wave pitch (P) in' which the wave height (H) is equal to or higher than one tenth of the wave pitch (P).

7. A tyre as claimed in claim 6, wherein the wave height (H) is higher than half the wave pitch (P).

8. A tyre as claimed in claim 6, wherein the wave height (H) is higher than four times the wave pitch (P).

9. A tyre as claimed in one or more of the preceding claims, wherein said mechanical-engagement elements (10a) have portions of mutual undercut constraint (10b).

10. A tyre as claimed in one or more of the preceding claims, wherein said undulated interface profile (10) comprises a plurality of waves having an inclined extension to a direction normal to a median line (L) of extension of the undulated profile.

11. A tyre as claimed in claim 10, wherein each wave has an inclination angle (α) between a bisecting line (K) of a vertex of said wave and said direction (Q) normal to the median line (L), included between about 30° and about 88°.

12. A tyre as claimed in claim 11, wherein said inclination angle (α) is included between about 60° and about 85°.

13. A tyre as claimed in one or more of the preceding claims, wherein coupled with said first component (8) is a third component (11) of elastomer material co-crosslinked with at least said first elastomer material.

14. A tyre as claimed in claim 13, wherein coupled with said second component (9) is a fourth component (12) of elastomer material co-crosslinked with at least one of said first and second elastomer material.

15. A tyre as claimed in one or more of the preceding claims, wherein said second component (9) extends along at least one surface portion of the first component (8) .

16. A tyre as claimed in one or more of the preceding claims, wherein said first elastomer material is co-crosslinked with the elastomer matrix of the carcass structure (2).

17. A method of manufacturing a tyre for vehicle wheels, comprising the steps of:
- forming a carcass structure (2) comprising reinforcing thread elements incorporated in an elastomer matrix;
- associating structural elements (28, 29, 30) of elastomer material with said carcass structure (2); wherein the step of associating the structural elements (28, 29, 30) of elastomer material with the carcass structure (2) comprises the steps of:
- preparing at least one first elongated element (13) comprising a first raw elastomer material and at least one second elongated element (14) comprising a second raw elastomer material having a different composition from that of said first elastomer material;
- laying said first elongated element (13) on a forming support (18), into coils wound up around a geometric axis (X) of said forming support (18) so as to form a first component (8) of said structural element (28, 29, 30);
- laying said second elongated element (14) on the forming support (18), into coils wound up around the geometric axis (X) of said forming support (18) so as to form a second component (9) of said structural element (28, 29, 30) superposed on said first component (8);
- curing said tyre
**characterized in that** a step of mutually coupling the first and second elongated elements (13, 14) along their longitudinal extension is achieved, to form a continuous strip-like element (20) that is wound around the geometric axis (X) of said forming support (18) according to circumferential coils in side by side relationship during the laying step, whereby an undulated interface profile (10) between said first and second components (8, 9) is generated, wherein said interface profile (10) defines elements of mechanical engagement (10a) between the first and second components.

18. A method as claimed in claim 17, wherein laying of the first and second elongated elements (13, 14) is carried out at a radially external position to the carcass structure (2) previously set on the forming support (18), to form a tread band (28) of said tyre (1).

19. A method as claimed in claim 17 or 18, further comprising the steps of setting at least one belt layer (7a, 7b) and associating said at least one belt layer (7a, 7b) with the carcass structure (2), wherein laying of the first and second elongated elements (13, 14) is carried out at a radially external position to said at least one belt layer (7a, 7b), before or after associating the belt layer with the carcass structure (2), to form a tread band (28) of said tyre (1).

20. A method as claimed in one or more of claims 17 to 19, wherein laying of the first and second elongated elements (13, 14) is carried out laterally against the carcass structure (2), to form at least one sidewall (29) of said tyre (1).

21. A method as claimed in one or more of claims 17 to 20, wherein laying of the first and second elongated elements (13, 14) is carried out at an axially external position to the forming support (18) to form at least one support insert (30) before setting the carcass structure (2) on the forming support (18) to apply said at least one support insert (30) laterally to the inside of the carcass structure (2) itself.

22. A method as claimed in one or more of claims 17 to 21, wherein said interface profile (10) has a wave height (H) and a wave pitch (P) in which the wave height (H) is at least as high as one tenth of the wave pitch (P).

23. A method as claimed in claim 22, wherein the wave height (H) is higher than half the wave pitch (P).

24. A method as claimed in claim 22, wherein the wave height (H) is higher than four times the wave pitch (P).

25. A method as claimed in one or more of claims 17 to 24, wherein said undulated interface profile (10) comprises a plurality of waves having an inclined extension to a direction (Q) normal to a median line (L) of extension of the undulated profile.

26. A method as claimed in claim 25, wherein each wave has an inclination angle (α) between a bisecting line (K) of a vertex of said wave and said direction (Q) normal to the median line (L) that is included between about 30° and about 88°.

27. A method as claimed in claim 26, wherein said inclination angle (α) is included between about 60° and about 85°.

28. A method as claimed in one or more of claims 17 to 27, wherein said mechanical-engagement elements (10) have portions of mutual undercut constraint (10b).

29. A method as claimed in one or more of claims 17 to 28, wherein at least one of said first and second elongated elements (13, 14) has a flattened cross-section conformation.

30. A method as claimed in one or more of claims 17 to 28, wherein at least one of said first and second elongated elements (13, 14) has a substantially triangular cross-section conformation.

31. A method as claimed in one or more of claims 17 to 28, wherein at least one of said first and second elongated elements (13, 14) has a substantially trapezoidal cross-section conformation.

32. A method as claimed in one or more of claims 17 to 31, wherein the coupling step is carried out before the laying steps.

33. A method as claimed in one or more of claims 17 to 31, wherein preparation of the continuous strip-like element (20) comprises the steps of:
- feeding the first elongated element (13) through a first feeding member (15);
- feeding the second elongated element (14) through a second feeding member (16) simultaneously with feeding of the first elongated element (13);
- guiding the first and second elongated elements (13, 14) in mutually converging directions, towards a point of mutual coupling.

34. A method as claimed in claim 33, wherein feeding of the first and second elongated elements (13, 14) takes place by extrusion through first and second extruders (15, 16) respectively, that are part of said first and second feeding members.

35. A method as claimed in one or more of claims 17 to 31, wherein the continuous strip-like element (20) is made by co-extrusion of the first and second elongated elements (13, 14) through the same extruder (26).

36. A method as claimed in one or more of claims 17 to 31, wherein the coupling step is carried out simultaneously with winding of the strip-like element (20) on the forming support (18), at a point of mutual coupling between the elongated elements (13, 14) placed on the forming support (18).

37. A method as claimed in one or more of claims 17 to 31, wherein the coupling step is carried out simultaneously with winding of the strip-like element (20) on the forming support (18), at a point of mutual coupling between the elongated elements (13, 14) placed upstream of the forming support (18).

38. A method as claimed in one or more of claims 17 to 35, wherein the first and second elongated elements (13, 14) are simultaneously laid on the forming support (18) at points (A, B) mutually spaced apart in a circumferential direction.

39. A method as claimed in one or more of claims 17 to 38, wherein following the coupling step, each of said elongated elements (13, 14) has a base portion (21, 22) integral with a base portion of the other elongated element, and at least one of said elongated elements (13, 14) has an apex (23, 24) projecting from the base portion (21, 22) transversely of a direction of mutual alignment (D) of the base portions (21, 22).

40. A method as claimed in claim 39, wherein the first and second elongated elements (13, 14) are coupled at mutually offset positions in a transverse direction relative to a direction (D) of mutual alignment of the base portions (21, 22), so that each elongated element (13, 14) has said apex (23, 24) projecting in the opposite direction relative to the apex of the other elongated element.

41. A method as claimed in claim 39 or 40, wherein the apex (23, 24) of an elongated element (13, 14) is turned up against a base portion (21, 22) of the other elongated element.

42. A method as claimed in one or more of claims 17 to 41, wherein laying of each of said first and second elongated elements (13, 14) comprises the steps of:
- feeding the elongated element (13, 14) from a feeding member (15, 16, 17) disposed adjacent to the forming support (18) for application of said elongated element onto the support itself;
- giving the forming support (18) a circumferential-distribution rotatory motion around the geometric rotation axis (X), so that the elongated element (13, 14) is circumferentially distributed on the forming support (18);
- carrying out controlled relative displacements of transverse distribution between the forming support (18) and feeding member (15, 16, 17) to form said coils.

43. A method as claimed in one or more of claims 17 to 42, further comprising the step of applying at least one third component (11) onto the forming support (18) before application of said first component (8), said third component (11) being of an elastomer material co-crosslinkable with at least said first elastomer material.

44. A method as claimed in one or more of claims 17 to 43, further comprising the step of applying a fourth component (12) subsequently to application of said second component (9), said fourth component (12) being of an elastomer material co-crosslinkable with at least said second elastomer material.

45. A method as claimed in one or more of claims 17 to 44, wherein said first elastomer material is co-crosslinkable with the elastomer matrix of the carcass structure (2).

46. An apparatus for manufacturing pneumatic tyres for vehicle wheels comprising:
- devices designed to form a carcass structure (2) comprising reinforcing thread elements incorporated in an elastomer matrix;
- devices (31) for associating structural elements (28, 29, 30) of elastomer material with said carcass structure (2);
- devices for curing said tyre,
wherein the devices for associating the structural elements (28, 29, 30) of elastomer material with the carcass structure (2) comprise at least one unit (31) for manufacturing said structural elements, **characterized in that** said unit (31) comprises:
- feeding members (15, 16) to supply at least one first elongated element (13) comprising a first raw elastomer material and at least one second elongated element (14) comprising a second raw elastomer material having a different composition from that of the first elastomer material;
- members (17, 25) for laying said first and second elongated elements (13, 14) on a forming support (18) into coils wound up around a geometric axis (X) of said forming support (18) so as to form a first component (8) of said structural element (28, 29, 30) and a second component (9) of said structural element (28, 29, 30) superposed on said first component (8), respectively;
further comprising devices for mutually coupling the first and second elongated elements (13, 14) along their longitudinal extension, to form a continuous strip-like element (20),
wherein said laying members (17, 25) are provided for winding said continuous strip-like element (20) around the geometric axis (X) of said forming support (18) according to circumferential coils in side by side relationship, whereby an undulated interface profile (10) is generated between said first and second components (8, 9), wherein said interface profile (10) defines elements of mechanical engagement (10a) between the first and second components (8, 9).

47. An apparatus as claimed in claim 46, wherein said at least one unit (31) for manufacturing structural elements is dedicated to manufacturing tread bands at a radially external position to the carcass structure (2).

48. An apparatus as claimed in claim 46 or 47, further comprising devices for making at least one belt layer (7a, 7b) and devices for associating said at least one belt layer (7a, 7b) with the carcass structure (2) at a radially external position, wherein said at least one unit (31) for manufacturing structural elements is dedicated to manufacturing tread bands (28) at a radially external position to said at least one belt layer (7a, 7b).

49. An apparatus as claimed in one or more of claims 46 to 48, wherein said at least one unit (31) for manufacturing structural elements is dedicated to manufacturing sidewalls (29) laterally disposed against the carcass structure (2).

50. An apparatus as claimed in one or more of claims 46 to 48, wherein said at least one unit (31) for manufacturing structural elements is dedicated to manufacturing auxiliary support inserts (30) for association with the carcass structure (2).

51. An apparatus as claimed in one or more of claims 46 to 50, wherein said at least one unit (31) for manufacturing structural elements comprises:
- a first feeding member (15) set to feed the first elongated element (13);
- a second feeding member (16) set to feed the second elongated element (14);
- devices (17, 25) for guiding the first and second elongated elements (13, 14) in mutually converging directions towards a mutual coupling point.

52. An apparatus as claimed in claim 51, wherein said mutual coupling point between the elongated elements (13, 14) is located on the forming support (18).

53. An apparatus as claimed in claim 51, wherein said mutual coupling point between the elongated elements (13, 14) is located upstream of the forming support (18).

54. An apparatus as claimed in claim 51, wherein the guiding devices convey the first and second elongated elements (13, 14) on the forming support (18) to points (A, B) that are mutually spaced apart in a circumferential direction.

55. An apparatus as claimed in one or more of claims 51 to 54, wherein said first and second feeding members comprise first and second extruders (15, 16), respectively.

56. An apparatus as claimed in one or more of claims 46 to 50, wherein said at least one unit (31) for manufacturing structural elements (28, 29, 30) comprises at least one extruder (26) for co-extrusion of the first and second elongated elements (13, 14) to manufacture said continuous strip-like element (20).

57. An apparatus as claimed in one or more of claims 46 to 56, wherein said at least one unit (31) for manufacturing structural elements (28, 29, 30) comprises:
- at least one feeding member (15, 16. 17) disposed adjacent to the forming support (18) for application of at least one of said elongated elements (13, 14) on the support itself;
- rotatory driving devices to give the forming support (18) a circumferential-distribution rotatory motion around the geometric rotation axis (X), so that the elongated element (13, 14) is circumferentially distributed on the forming support (18);
- translational driving devices to carry out controlled relative displacements of transverse distribution between the forming support (18) and the feeding member (15, 16, 17) in order to form said coils.

58. An apparatus as claimed in one or more of claims 46 to 57, wherein said at least one unit (31) for manufacturing structural elements (28, 29, 30) further comprises devices for application on the forming support (18), of at least one third component (11) of elastomer material co-crosslinkable with at least said first elastomer material.

59. An apparatus as claimed in one or more of claims 46 to 58, wherein said at least one unit (31) for manufacturing structural elements (28, 29, 30) further comprises devices for application on the forming support (18), of a fourth component (12) of elastomer material co-crosslinkable with at least said second elastomer material.

## Patentansprüche

1. Luftreifen für Fahrzeugräder mit:
- einer Karkassenstruktur (2) mit verstärkenden Faserelementen, die in eine Elastomermatrix eingebettet sind,
- Strukturelementen aus Elastomermaterial (28, 29, 30), die der Karkassenstruktur (2) zugeordnet sind,
wobei wenigstens eines der Strukturelemente (28, 29, 30) aufweist:
- wenigstens eine erste Komponente (8), die aus einem ersten Elastomermaterial gebildet ist,
- und wenigstens eine zweite Komponente (9), die aus einem zweiten Elastomermaterial, das von dem ersten Elastomermaterial verschieden ist, gebildet ist,
wobei die erste und zweite Komponente (8, 9) ein gewelltes Grenzflächenprofil (10) aufweisen,
wobei das Grenzflächenprofil (10) mechanische Eingriffselemente (10a) zwischen der ersten und zweiten Komponente (8, 9) definiert,
**dadurch gekennzeichnet, dass** das gewellte Grenzflächenprofil (10) ein durchgehendes streifenartiges Element (20) aufweist, das sich um die geometrische Achse (X) des Reifens gemäß Umfangsspiralen in einer nebeneinander angeordneten Beziehung herum erstreckt,
bei der das durchgehende streifenartige Element (20) ein erstes und ein zweites längliches Element (13, 14) aufweist, die miteinander entlang ihrer Längserstreckung gekoppelt sind.

2. Reifen nach Anspruch 1, bei dem eine Lauffläche (28), die auf der Karkassenstruktur (2) an einer radial äußeren Position aufgebracht ist, die zweite Komponente (9) an einer im Vergleich zu der ersten Komponente (8) radial äußeren Position vorgesehen hat.

3. Reifen nach Anspruch 1 oder 2, bei dem ein Paar Seitenwände (29) an der Karkassenstruktur (2) an seitlich gegenüberliegenden Positionen angebracht ist, wobei wenigstens eine der Seitenwände (29) die zweite Komponente (9) an einer Position vorgesehen hat, die axial außerhalb der ersten Komponente (8) ist.

4. Reifen nach einem oder mehreren der vorherigen Ansprüche, bei dem ein Paar Hilfslagereinsätze (30) der Karkassenstruktur (2) zugeordnet ist, wobei wenigstens eines der Hilfslagereinsätze (30) die zweite Komponente (9) an einer bezüglich der ersten Komponente (8) axial äußeren Position vorgesehen hat.

5. Reifen nach einem oder mehreren der vorherigen Ansprüche, bei dem ein Auskleidungsmittel und ein Unterauskleidungsmittel an der Karkassenstruktur (2) an einer radial inneren Position angebracht sind, wobei das Unterauskleidungsmittel die zweite Komponente (9) an einer im Vergleich zu der ersten Komponente (8), die das Auskleidungsmittel bildet, radial äußeren Position aufweist.

6. Reifen nach einem oder mehreren der vorherigen Ansprüche, bei dem das Grenzflächenprofil (10) eine Wellenhöhe (H) und einen Wellenabstand (P) aufweist, bei denen die Wellenhöhe (H) größer oder gleich einem Zehntel des Wellenabstands (P) ist.

7. Reifen nach Anspruch 6, bei dem die Wellenhöhe (H) größer ist als die Hälfte des Wellenabstands (P).

8. Reifen nach Anspruch 6, bei dem die Wellenhöhe (H) größer als der vierfache Wellenabstand (P) ist.

9. Reifen nach einem oder mehreren der vorherigen Ansprüche, bei dem die mechanischen Eingriffselemente (10a) Abschnitte einer gegenseitigen hinterschnittenen Verschränkung (10b) aufweisen.

10. Reifen nach einem oder mehreren der vorherigen Ansprüche, bei dem das gewellte Grenzflächenprofil (10) mehrere Wellen mit einer geneigten Erstreckung in einer Richtung senkrecht zu einer Mittellinie (L) der Erstreckung des gewellten Profils aufweist.

11. Reifen nach Anspruch 10, bei dem jede Welle einen Neigungswinkel (α) zwischen einer Winkelhalbierenden (K) eines Scheitels der Welle und der Richtung (Q), die senkrecht zu der Mittellinie (L) ist, aufweist, der zwischen ungefähr 30° und ungefähr 88° liegt.

12. Reifen nach Anspruch 11, bei dem der Neigungswinkel (α) zwischen ungefähr 60° und ungefähr 85° liegt.

13. Reifen nach einem oder mehreren der vorherigen Ansprüche, wobei mit der ersten Komponente (8) eine dritte Komponente (11) aus Elastomermaterial, das wenigstens mit dem ersten Elastomermaterial vernetzt ist, gekoppelt ist.

14. Reifen nach Anspruch 13, wobei mit der zweiten Komponente (9) eine vierte Komponente (12) aus Elastomermaterial, das mit dem ersten und/oder zweiten Elastomermaterial vernetzt ist, gekoppelt ist.

15. Reifen nach einem oder mehreren der vorherigen Ansprüche, bei dem sich die zweite Komponente (9) entlang wenigstens eines Oberflächenabschnitts der ersten Komponente (8) erstreckt.

16. Reifen nach einem oder mehreren der vorherigen Ansprüche, bei dem das erste Elastomermaterial mit der Elastomermatrix der Karkassenstruktur (2) quervernetzt ist.

17. Verfahren zum Herstellen eines Reifens für Fahrzeugräder mit den Schritten:
- des Ausbildens einer Karkassenstruktur (2) mit verstärkenden Fadenelementen, die in eine Elastomermatrix eingebettet sind,
- des Zuordnens von Strukturelementen (28, 29, 30) aus Elastomermaterial zu der Karkassenstruktur (2),
bei dem der Schritt des Zuordnens der Strukturelemente (28, 29, 30) aus Elastomermaterial zu der Karkassenstruktur (2) als Schritte aufweist:
- das Vorbereiten wenigstens eines länglichen Elements (13) mit einem ersten unverarbeiteten Elastomermaterial und wenigstens eines zweiten länglichen Elements (14) mit einem zweiten unverarbeiteten Elastomermaterial mit einer Zusammensetzung, die von derjenigen des ersten Elastomermaterials verschieden ist,
- das Legen des ersten länglichen Elements (13) auf ein formendes Lager (18) in Spiralen, die um eine geometrische Achse (X) des formenden Lagers (18) gewunden sind, um somit eine erste Komponente (8) des Strukturelements (28, 29, 30) zu bilden,
- das Legen des zweiten länglichen Elements (14) auf das formende Lager (18) in Spiralen, die um die geometrische Achse (X) des formenden Lagers (18) gewunden sind, um somit eine zweite Komponente (9) des Strukturelements (28, 29, 30) zu bilden, die der ersten Komponente (8) überlagert ist,
- das Aushärten des Reifens,
**dadurch gekennzeichnet, dass** ein Schritt des gegenseitigen Koppelns der ersten und zweiten länglichen Elemente (13, 14) entlang ihrer Längserstreckung erzielt wird, um ein durchgehendes streifenartiges Element (20) zu bilden, das um die geometrische Achse (X) des formenden Lagers (18) gemäß Umfangsspiralen in einer nebeneinander angeordneten Beziehung während des Legeschritts gewunden wird, wobei ein gewelltes Grenzflächenprofil (10) zwischen der ersten und der zweiten Komponente (8, 9) erzielt wird, wobei das Grenzflächenprofil (10) mechanische Eingriffselemente (10a) zwischen der ersten und zweiten Komponente definiert.

18. Verfahren nach Anspruch 17, bei dem das Legen der ersten und zweiten länglichen Elemente (13, 14) an einer radial äußeren Position in Bezug auf die Karkassenstruktur (2), die vorher auf das formende Lager gelegt wurde, ausgeführt wird, um eine Lauffläche (28) des Reifens (1) zu bilden.

19. Verfahren nach Anspruch 17 oder 18, ferner mit den Schritten des Legens wenigstens einer Gürtelschicht (7a, 7b) und des Zuordnens der wenigstens einen Gürtelschicht (7a, 7b) zu der Karkassenstruktur (2), wobei das Legen der ersten und zweiten länglichen Elemente (13, 14) an einer radial in Bezug auf die wenigstens eine Gürtelschicht (7a, 7b) äußeren Position vor oder nach dem Zuordnen der Gürtelschicht zu der Karkassenstruktur (2) ausgeführt wird, um eine Lauffläche (28) des Reifens (1) zu bilden.

20. Verfahren nach einem der Ansprüche 17 bis 19, bei dem das Legen der ersten und zweiten länglichen Elemente (13, 14) seitlich in Bezug auf die Karkassenstruktur (2) ausgeführt wird, um wenigstens eine Seitenwand (29) des Reifens (1) zu bilden.

21. Verfahren nach einem der Ansprüche 17 bis 20, bei dem das Legen der ersten und zweiten länglichen Elemente (13, 14) an einer in Bezug auf das formende Lager (18) axial äußeren Position ausgeführt wird, um wenigstens einen Lagereinsatz (30) vor dem Legen der Karkassenstruktur (2) auf das formende Lager (18) zu bilden, um den wenigstens einen Lagereinsatz (30) seitlich in Bezug auf das Innere der Karkassenstruktur (2) selbst anzubringen.

22. Verfahren nach einem der Ansprüche 17 bis 21, bei dem das Grenzflächenprofil (10) eine Wellenhöhe (H) und einen Wellenabstand (P) aufweist, bei denen die Wellenhöhe (H) wenigstens so hoch wie ein Zehntel des Wellenabstands (P) ist.

23. Verfahren nach Anspruch 22, bei dem die Wellenhöhe (H) größer ist als die Hälfte des Wellenabstands (P).

24. Verfahren nach Anspruch 22, bei dem die Wellenhöhe (H) größer ist als der vierfache Wellenabstand (P).

25. Verfahren nach einem oder mehreren der Ansprüche 17 bis 24, bei dem das gewellte Grenzflächenprofil (10) mehrere Wellen mit einer geneigten Erstreckung in einer Richtung (Q) senkrecht zu einer Mittellinie (L) der Erstreckung des gewellten Profils aufweist.

26. Verfahren nach Anspruch 25, bei dem jede Welle einen Neigungswinkel (α) zwischen einer Winkelhalbierenden (K) eines Scheitels der Welle und der Richtung (Q) senkrecht zu der Mittellinie (L) aufweist, der zwischen ungefähr 30° und ungefähr 88° liegt.

27. Verfahren nach Anspruch 26, bei dem der Neigungswinkel (α) zwischen ungefähr 60° und ungefähr 85° liegt.

28. Verfahren nach einem oder mehreren der Ansprüche 17 bis 27, bei dem die mechanischen Eingriffselemente (10) Abschnitte von einer gegenseitigen hinterschnittenen Verschränkung (10b) aufweisen.

29. Verfahren nach einem oder mehreren der Ansprüche 17 bis 28, bei dem wenigstens eines der ersten und zweiten länglichen Elemente (13, 14) eine abgeflachte Querschnittsgestalt aufweist.

30. Verfahren nach einem oder mehreren der Ansprüche 17 bis 28, bei dem wenigstens eines der ersten und zweiten länglichen Elemente (13, 14) eine im Wesentlichen dreieckige Querschnittsgestalt aufweist.

31. Verfahren nach einem oder mehreren der Ansprüche 17 bis 28, bei dem wenigstens eines der ersten und zweiten länglichen Elemente (13, 14) eine im Wesentlichen trapezförmige Querschnittsgestalt aufweist.

32. Verfahren nach einem oder mehreren der Ansprüche 17 bis 31, bei dem der Kopplungsschritt vor den Legeschritten ausgeführt wird.

33. Verfahren nach einem oder mehreren der Ansprüche 17 bis 31, bei dem das Vorbereiten des durchgehenden streifenartigen Elements (20) als Schritte aufweist:
- das Zuführen des ersten länglichen Elements (13) durch ein erstes Zuführelement (15),
- das Zuführen des zweiten länglichen Elements (14) durch ein zweites Zuführelement (16) gleichzeitig mit dem Zuführen des ersten länglichen Elements (13),
- das Leiten des ersten und zweiten länglichen Elements (13, 14) in gegenseitig zusammenlaufende Richtungen zu einem Punkt des gegenseitigen Koppelns hin.

34. Verfahren nach Anspruch 33, bei dem das Zuführen des ersten und zweiten länglichen Elements (13, 14) durch Extrusion jeweils durch erste und zweite Extruder (15, 16) stattfindet, die Teil der ersten und zweiten Zuführelemente sind.

35. Verfahren nach einem oder mehreren der Ansprüche 17 bis 31, bei dem das durchgehende streifenartige Element (20) durch Koextrusion der ersten und zweiten länglichen Elemente (13, 14) durch den gleichen Extruder (26) hergestellt wird.

36. Verfahren nach einem oder mehreren der Ansprüche 17 bis 31, bei dem der Kopplungsschritt gleichzeitig mit dem Aufwickeln des streifenartigen Elements (20) auf das formende Lager (18) an einem Punkt des gegenseitigen Koppelns zwischen den länglichen Elementen (13, 14), die an dem formenden Lager (18) angeordnet sind, ausgeführt wird.

37. Verfahren nach einem der Ansprüche 17 bis 31, bei dem der Kopplungsschritt gleichzeitig mit dem Aufwickeln des streifenartigen Elements (20) auf das formende Lager (18) an einem Punkt des gegenseitigen Koppelns zwischen den länglichen Elementen (13, 14), die dem formenden Lager (18) vorgelagert angeordnet ist, ausgeführt wird.

38. Verfahren nach einem oder mehreren der Ansprüche 17 bis 35, bei dem das erste und das zweite längliche Elemente (13, 14) gleichzeitig auf das formende Lager (18) an Punkten (A, B) gelegt werden, die in einer Umfangsrichtung voneinander beabstandet sind.

39. Verfahren nach einem oder mehreren der Ansprüche 17 bis 38, wobei im Anschluss an den Kopplungsschritt jedes der länglichen Elemente (13, 14) einen Basisabschnitt (21, 22) aufweist, der einstückig mit einem Basisabschnitt des anderen länglichen Elements ist, wobei wenigstens eines der länglichen Elemente (13, 14) eine Spitze (23, 24) aufweist, die von dem Basisabschnitt (21, 22) quer zu einer Richtung der gegenseitigen Ausrichtung (D) der Basisabschnitte (21, 22) hervorragt.

40. Verfahren nach Anspruch 39, bei dem die ersten und zweiten länglichen Elemente (13, 14) an gegenseitig versetzten Positionen in einer Querrichtung relativ zu einer Richtung (D) der gegenseitigen Ausrichtung der Basisabschnitte (21) gekoppelt sind, sodass jedes längliche Element (13, 14) die Spitze (23, 24) so aufweist, dass sie in der in Bezug auf die Spitze des anderen länglichen Elements entgegengesetzten Richtung hervorsteht.

41. Verfahren nach Anspruch 39 oder 40, bei dem die Spitze (23, 24) eines länglichen Elements (13, 14) in Bezug auf einen Basisabschnitt (21, 22) des anderen länglichen Elements umgebogen ist.

42. Verfahren nach einem oder mehreren der Ansprüche 17 bis 41, bei dem das Legen sowohl von dem ersten als auch von dem zweiten länglichen Element (13, 14) als Schritte aufweist:
- das Zuführen des länglichen Elements (13, 14) von einem Zuführelement (15, 16, 17), das benachbart zu dem formenden Lager vorgesehen ist, zum Aufbringen des länglichen Elements auf das Lager selbst,
- das Versetzen des formenden Lagers (18) in eine Umfangsverteilungsdrehbewegung um die geometrische Drehachse (X), sodass das längliche Element (13, 14) umfänglich auf dem formenden Lager (18) verteilt wird,
- das Ausführen von geregelten relativen Verschiebungen der Querverteilung zwischen dem formenden Lager (18) und dem Zuführelement (15, 16, 17), um die Spiralen auszubilden.

43. Verfahren nach einem der Ansprüche 17 bis 42, ferner mit dem Schritt des Aufbringens wenigstens einer dritten Komponente (11) auf das formende Lager (18) vor dem Aufbringen der ersten Komponente (8), wobei die dritte Komponente (11) aus einem Elastomermaterial besteht, das wenigstens mit dem ersten Elastomermaterial vernetzbar ist.

44. Verfahren nach einem oder mehreren der Ansprüche 17 bis 43, ferner mit dem Schritt des Aufbringens einer vierten Komponente (12) im Anschluss an das Aufbringen der zweiten Komponente (9), wobei die vierte Komponente (12) aus einem Elastomermaterial besteht, das wenigstens mit dem zweiten Elastomermaterial quervernetzbar ist.

45. Verfahren nach einem oder mehreren der Ansprüche 17 bis 44, bei dem das erste Elastomermaterial mit der Elastomermatrix der Karkassenstruktur (2) quervernetzbar ist.

46. Vorrichtung zum Herstellen von Luftreifen für Fahrzeugräder mit:
- Einrichtungen, die dafür vorgesehen sind, um eine Karkassenstruktur (2) mit verstärkenden Fadenelementen auszubilden, die in eine Elastomermatrix eingebettet sind,
- Einrichtungen (31) zum Zuordnen der Strukturelemente (28, 29, 30) aus Elastomermaterial zu der Karkassenstruktur (2),
- Einrichtungen zum Aushärten des Reifens,
bei dem die Einrichtungen zum Zuordnen der Strukturelemente (28, 29, 30) aus Elastomermaterial zu der Karkassenstruktur (2) wenigstens eine Einheit (31) zum Herstellen der Strukturelemente aufweisen,
**dadurch gekennzeichnet, dass** die Einheit (31) aufweist:
- Zuführelemente (15, 16) zum Einbringen wenigstens eines länglichen Elements (13) mit einem ersten unverarbeiteten Elastomermaterial und wenigstens eines zweiten länglichen Elements (14) mit einem zweiten unverarbeiteten Elastomermaterial mit einer Zusammensetzung, die von derjenigen des ersten Elastomermaterials verschieden ist,
- Elemente (17, 25) zum Legen der ersten und zweiten länglichen Elemente (13, 14) auf ein formendes Lager (18) in Spiralen, die um eine geometrische Achse (X) des formenden Lagers (18) gewunden sind, um somit eine erste Komponente (8) des Strukturelements (28, 29, 30) und eine zweite Komponente (9) des Strukturelements (28, 29, 30), die der ersten Komponente (8) jeweils überlagert ist, auszubilden,
ferner mit Einrichtungen zum gegenseitigen Koppeln der ersten und zweiten länglichen Elemente (13, 14) entlang ihrer Längserstreckung, um ein durchgehendes streifenartiges Element (20) zu formen,
wobei die Legeelemente (17, 25) zum Aufwickeln des durchgehenden streifenartigen Elements (20) um die geometrische Achse (X) des formenden Lagers (18) gemäß Umfangsspiralen in einer nebeneinander angeordneten Beziehung vorgesehen sind, wobei ein gewelltes Grenzflächenprofil (10) zwischen der ersten und zweiten Komponente (8, 9) erzeugt wird, wobei das Grenzflächenprofil (10) mechanische Eingriffselemente (10a) zwischen der ersten und zweiten Komponente (8, 9) definiert.

47. Vorrichtung nach Anspruch 46, bei der die wenigstens eine Einheit (31) zum Herstellen von Strukturelementen zum Herstellen von Laufflächen an einer in Bezug auf die Karkassenstruktur (2) radial äußeren Position bestimmt ist.

48. Vorrichtung nach Anspruch 46 oder 47, ferner mit Einrichtungen zum Herstellen wenigstens einer Gürtelschicht (7a, 7b) und Einrichtungen zum Zuordnen der wenigstens einen Gürtelschicht (7a, 7b) zu der Karkassenstruktur (2) an einer radial äußeren Position, bei der die wenigstens eine Einheit (31) zum Herstellen von Strukturelementen zum Herstellen von Laufflächen (28) an einer radial äußeren Position in Bezug auf die wenigstens eine Gürtelschicht (7a, 7b) bestimmt ist.

49. Vorrichtung nach einem oder mehreren der Ansprüche 46 bis 48, bei der die wenigstens eine Einheit (31) zum Herstellen von Strukturelementen zum Herstellen von Seitenwänden (29), die seitlich in Bezug auf die Karkassenstruktur (2) vorgesehen sind, bestimmt ist.

50. Vorrichtung nach einem oder mehreren der Ansprüche 46 bis 48, bei der die wenigstens eine Einheit (31) zum Herstellen von Strukturelementen zum Herstellen von Hilfslagereinsätzen (30) zum Zuordnen mit der Karkassenstruktur (2) bestimmt ist.

51. Vorrichtung nach einem oder mehreren der Ansprüche 46 bis 50, bei der die wenigstens eine Einheit (31) zum Herstellen von Strukturelementen aufweist:
- ein erstes Zuführelement (15), das zum Zuführen des ersten länglichen Elements (13) eingestellt ist,
- ein zweites Zuführelement (16), das zum Zuführen des zweiten länglichen Elements (14) eingestellt ist,
- Einrichtungen (17, 25) zum Leiten des ersten und zweiten länglichen Elements (13, 14) in gegenseitige zusammenlaufende Richtungen zu einem gegenseitigen Kopplungspunkt hin.

52. Vorrichtung nach Anspruch 51, bei welcher der gegenseitige Kopplungspunkt zwischen den länglichen Elementen (13, 14) an dem formenden Lager (18) angeordnet ist.

53. Vorrichtung nach Anspruch 51, bei welcher der gegenseitige Kopplungspunkt zwischen den länglichen Elementen (13, 14) dem formenden Lager (18) vorgelagert angeordnet ist.

54. Vorrichtung nach Anspruch 51, bei der die Leiteinrichtungen die ersten und zweiten länglichen Elementen (13, 14) an dem formenden Lager (18) zu Punkten (A, B) leiten, die gegenseitig in einer Umfangsrichtung voneinander beabstandet sind.

55. Vorrichtung nach einem oder mehreren der Ansprüche 51 bis 54, bei der das erste und zweite Zuführelement jeweils erste und zweite Extruder (15, 16) aufweisen.

56. Vorrichtung nach einem oder mehreren der Ansprüche 46 bis 50, bei der die wenigstens eine Einheit (31) zum Herstellen von Strukturelementen (28, 29, 30) wenigstens einen Extruder (26) zur Koextrusion der ersten und zweiten länglichen Elemente (13, 14) aufweist, um das durchgehende streifenartige Element (20) herzustellen.

57. Vorrichtung nach einem oder mehreren der Ansprüche 46 bis 56, bei der die wenigstens eine Einheit (31) zum Herstellen der Strukturelemente (28, 29, 30) aufweist:
- wenigstens ein Zuführelement (15, 16, 17), das auf dem formenden Lager (18) zum Aufbringen des wenigstens einen länglichen Elements (13, 14) auf das Lager selbst vorgesehen ist,
- Drehantriebseinrichtungen, um das formende Lager (18) in eine Umfangsverteilungsdrehbewegung um die geometrische Drehachse (X) zu versetzen, sodass das längliche Element (13, 14) umfänglich auf dem formenden Lager (18) verteilt wird,
- Translationsantriebseinrichtungen, um eine geregelte relative Verschiebung der Querverteilung zwischen dem formenden Lager (18) und dem Zuführelement (15, 16, 17) auszuführen, um die Spiralen zu formen.

58. Vorrichtung nach einem oder mehreren der Ansprüche 46 bis 57, bei dem die wenigstens eine Einheit (31) zum Herstellen der Strukturelemente (28, 29, 30) ferner Einrichtungen zum Aufbringen von wenigstens einer dritten Komponente (11) eines Elastomermaterials, das wenigstens mit dem ersten Elastomermaterial quervernetzbar ist, auf das formende Lager (18) aufweist.

59. Vorrichtung nach einem oder mehreren der Ansprüche 46 bis 58, bei dem die wenigstens eine Einheit (31) zum Herstellen der Strukturelemente (28, 29, 30) ferner Einrichtungen zum Aufbringen einer vierten Komponente (12) aus Elastomermaterial, das wenigstens mit dem zweiten Elastomermaterial quervernetzbar ist, auf das formende Lager (18) aufweist.

## Revendications

1. Pneumatique pour roues de véhicule, comprenant :
- une structure de carcasse (2) incluant des éléments de renfort de roulement incorporés dans une matrice élastomère ;
- des éléments structurels de matériau élastomère (28, 29, 30)
associés avec ladite structure de carcasse (2) ;
dans lequel au moins un desdits éléments structurels (28, 29, 30) comprend :
- au moins un premier composant (8) formé d'un premier matériau élastomère,
- et au moins un second composant (9) formé d'un second matériau
élastomère différent dudit premier matériau élastomère ;
dans lequel lesdits premier et second composants (8, 9) ont un profil d'interface ondulé (10) ;
dans lequel ledit profil d'interface (10) définit des éléments à engagement mécanique (10a) entre le premier et le second composants (8, 9), **caractérisé en ce que** ledit profil d'interface ondulé (10) comprend un élément en forme de bande continue (20) s'étendant autour de l'axe géométrique (X) du pneumatique selon un enroulement circonférentiel côte à côte,
dans lequel ledit élément en forme de bande continue (20) comprend un premier et un second éléments étirés (13, 14) mutuellement couplés le long de leur extension longitudinale.

2. Pneumatique selon la revendication 1, dans lequel une bande de roulement (28) appliquée sur la structure de carcasse (2) en une position radialement externe audit second composant (9) disposé en une position radialement externe audit premier composant (8).

3. Pneumatique selon les revendications 1 ou 2, dans lequel une paire de flancs latéraux (29) est appliquée à la structure de carcasse (2) en des positions latéralement opposées, au moins l'un desdits flancs latéraux (29) ayant ledit second composant (9) disposé en une position axialement externe au premier composant (8).

4. Pneumatique selon l'une quelconque des revendications précédentes, dans lequel une paire d'inserts auxiliaires de support (30) est associée avec la structure de carcasse (2), au moins l'un desdits inserts auxiliaires (30) ayant ledit second composant (9) disposé en une position axialement externe au premier composant (8).

5. Pneumatique selon l'une quelconque des revendications précédentes, dans lequel une doublure et une sous-doublure sont appliquées sur la structure de carcasse (2) en une position radialement externe, ladite sous-doublure comprenant ledit second composant (9) en une position radialement externe audit premier composant (8) formant ladite doublure.

6. Pneumatique selon l'une quelconque des revendications précédentes, dans lequel le profil d'interface (10) a une hauteur de rainure (H) et un pas de rainure (P) tels que la hauteur de rainure (H) est égale ou plus grande que le dixième du pas de rainure (P).

7. Pneumatique selon la revendication 6, dans lequel la hauteur de rainure (H) est plus grande que la moitié du pas de rainure (P).

8. Pneumatique selon la revendication 6, dans lequel la hauteur de rainure (H) est plus grande que quatre fois le pas de rainure (P).

9. Pneumatique selon l'une quelconque des revendications précédentes, dans lequel lesdits éléments à engagement mécanique (10a) ont des parties de contraintes inférieures mutuelles (10b).

10. Pneumatique selon l'une quelconque des revendications précédentes, dans lequel ledit profil d'interface ondulé (10) comprend une pluralité de rainures ayant une extension inclinée par rapport à une direction normale à une ligne médiale (L) d'extension du profil ondulé.

11. Pneumatique selon la revendication 10, dans lequel chaque rainure a un angle d'inclinaison (a) entre une ligne bissectrice (K) d'un sommet de ladite rainure et ladite direction (Q) normale à la ligne médiane (L), qui est compris entre approximativement 30° et approximativement 88°.

12. Pneumatique selon la revendication 11, dans lequel ledit angle d'inclinaison (a) est compris entre approximativement 60° et approximativement 85°.

13. Pneumatique selon l'une quelconque des revendications précédentes, dans lequel un troisième composant (11) d'un matériau élastomère co-réticulé avec au moins ledit premier matériau élastomère est couplé avec ledit premier composant (8).

14. Pneumatique selon la revendication 13, dans lequel un quatrième composant (12) d'un matériau élastomère co-réticulé avec au moins un desdits premier et second matériaux élastomères est couplé avec ledit second composant (9).

15. Pneumatique selon l'une quelconque des revendications précédentes, dans lequel ledit second composant (9) s'étend le long d'au moins une partie de surface du premier composant (8).

16. Pneumatique selon l'une quelconque des revendications précédentes, dans lequel ledit premier matériau élastomère est co-réticulé avec la matrice élastomère de la structure de carcasse (2).

17. Procédé de confection d'un pneumatique de roues de véhicule, comprenant les étapes de :
- former une structure de carcasse (2) comprenant des éléments de renfort de roulement incorporés dans une matrice élastomère ;
- associer des éléments structurels (28, 29, 30) d'un matériau
élastomère avec ladite structure de carcasse (2) ;
dans lequel l'étape d'association des éléments structurels (28, 29, 30) de matériau élastomère avec la structure de carcasse (2) comprend les étapes suivantes:
- préparer au moins un premier élément étiré (13) comprenant un premier rang de matériau élastomère et au moins un second élément étiré (14) comprenant un second rang de matériau élastomère ayant une composition différente de celle dudit premier matériau élastomère ;
- appliquer ledit premier élément étiré (13) sur le support formant (18), en bobines enroulées autour d'un axe géométrique (X) dudit support formant (18) pour former un premier composant (8) dudit élément structurel (28, 29, 30) ;
- appliquer ledit second élément étiré (14) sur le support formant (18), en bobines enroulées autour d'un axe géométrique (X) dudit support formant (18) pour former un second composant (9) dudit élément structurel (28, 29, 30) superposé sur ledit premier composant (8);
- durcir ledit pneumatique
**caractérisé en ce qu'**une étape de couplage mutuel des premier et second éléments étirés (13, 14) le long de leur extension longitudinale est réalisée, pour former un élément en forme de bande continue (20) qui est enroulé autour de l'axe géométrique (X) dudit support formant (18) selon des bobines circonférentielles côte à côte pendant l'étape d'application, où un profil d'interface ondulé (10) entre lesdits premier et second composants (8, 9) est généré, dans lequel ledit profil d'interface (10) définit des éléments d'engagement mécanique (10a) entre les premier et second composants.

18. Procédé selon la revendication 17, dans lequel l'application des premier et second éléments étirés (13, 14) est mise en oeuvre en une position radialement externe à la structure de carcasse (2) précédemment placée sur le support formant (18), pour former une bande de roulement (28) dudit pneumatique (1).

19. Procédé selon les revendication 17 ou 18, comprenant en outre les étapes de placement d'au moins une couche de ceinture (7a, 7b) et d'association de ladite au moins une couche de ceinture (7a, 7b) avec la structure de carcasse (2), dans lequel l'application des premier et second éléments étirés (13, 14) est mise en oeuvre en une position radialement externe à ladite au moins une couche de ceinture (7a, 7b), avant ou après l'association de la couche de ceinture avec la structure de carcasse (2), pour former une bande de roulement (28) dudit pneumatique (1).

20. Procédé selon l'une quelconque des revendication 17 à 19, dans lequel l'application des premier et second éléments étirés (13, 14) est mise en oeuvre latéralement contre la structure de carcasse (2), pour former au moins un flanc latéral (29) dudit pneumatique (1).

21. Procédé selon l'une quelconque des revendication 17 à 20, dans lequel l'application des premier et second éléments étirés (13, 14) est mise en oeuvre en une position axialement externe au support formant (18) pour former au moins un insert de support (30) avant de placer la structure de carcasse (2) sur le support formant (18) pour placer ledit au moins un insert de support (30) latéralement à l'intérieur de la structure de carcasse (2) elle-même.

22. Procédé selon l'une quelconque des revendication 17 à 21, dans lequel ledit profil d'interface (10) a une hauteur de rainure (H) et un pas de rainure (P) tels que la hauteur de rainure (H) est au moins aussi grande que le dixième du pas de rainure (P).

23. Procédé selon la revendication 22, dans lequel la hauteur de rainure (H) est plus grande que la moitié du pas de rainure (P).

24. Procédé selon la revendication 22, dans lequel la hauteur de rainure (H) est supérieure à quatre fois le pas de rainure (P).

25. Procédé selon l'une quelconque des revendication 17 à 24, dans lequel ledit profil d'interface ondulé (10) comprend une pluralité de rainures ayant une extension inclinée selon une direction (Q) normale à la ligne médiane (L) d'extension du profil ondulé.

26. Procédé selon la revendication 25, dans lequel chaque rainure a un angle d'inclinaison (a) entre une ligne bissectrice (K) d'un sommet de ladite rainure et ladite direction (Q) normale à la ligne médiane (L) qui est compris entre approximativement 30° et approximativement 88°.

27. Procédé selon la revendication 26, dans lequel ledit angle d'inclinaison (a) est compris entre approximativement 60° et approximativement 85°.

28. Procédé selon l'une quelconque des revendication 17 à 27, dans lequel lesdits élément à engagement mécanique (10) ont des parties de contraintes inférieures mutuelles (10b).

29. Procédé selon l'une quelconque des revendication 17 à 28, dans lequel au moins un desdits premier et second éléments étirés (13, 14) a une conformation de coupe aplatie.

30. Procédé selon l'une quelconque des revendication 17 à 28, dans lequel au moins un desdits premier et second éléments étirés (13, 14) a une conformation de coupe sensiblement triangulaire.

31. Procédé selon l'une quelconque des revendication 17 à 28, dans lequel au moins un desdits premier et second éléments étirés (13, 14) a une conformation de coupe sensiblement trapézoïdale.

32. Procédé selon l'une quelconque des revendication 17 à 31, dans lequel l'étape de couplage est mise en oeuvre avant les étapes d'applications.

33. Procédé selon l'une quelconque des revendication 17 à 31, dans lequel une préparation d'élément en forme de bande continue (20) comprend les étapes de :
- remplir le premier élément étiré (13) à travers un premier membre de remplissage (15) ;
- remplir le second élément étiré (14) à travers un second membre de remplissage (16) en même temps que le remplissage du premier élément étiré (13) ;
- guider les premier et second éléments étirés (13, 14) le long de directions mutuellement convergentes, jusqu'à un point de couplage mutuel.

34. Procédé selon la revendication 33, dans lequel le remplissage des premier et second éléments étirés (13, 14) s'effectue respectivement par une extrusion utilisant respectivement des première et seconde extrudeuses (15, 16), qui sont comprises dans les premier et second membres de remplissage.

35. Procédé selon l'une quelconque des revendication 17 à 31, dans lequel l'élément en forme de bande continue (20) est créé par coextrusion des premier et second éléments étirés (13, 14) en utilisant la même extrudeuse (26).

36. Procédé selon l'une quelconque des revendication 17 à 31, dans lequel l'étape de couplage est mise en oeuvre en enroulant simultanément l'élément en forme de bande (20) sur le support formant (18), en un point de couplage mutuel entre les éléments étirés (13, 14) placé sur le support formant (18).

37. Procédé selon l'une quelconque des revendication 17 à 31, dans lequel l'étape de couplage est mise en oeuvre en enroulant simultanément l'élément en forme de bande (20) sur le support formant (18), en un point de couplage mutuel entre les éléments étirés (13, 14) placé en amont du support formant (18).

38. Procédé selon l'une quelconque des revendication 17 à 35, dans lequel les premier et second éléments étirés (13, 14) sont simultanément appliqués sur le support formant (18) en des points (A, B) mutuellement espacés selon une direction circonférentielle.

39. Procédé selon l'une quelconque des revendication 17 à 38, dans lequel après l'étape de couplage, chacun desdits éléments étirés (13, 14) a une partie de base (21, 22) solidaire d'une partie de base de l'autre élément étiré, et au moins l'un desdits éléments étirés (13, 14) a un sommet (23, 24) en saillie de la partie de base (21, 22) transversalement à une direction (D) d'alignement mutuel des parties de base (21, 22).

40. Procédé selon la revendication 39, dans lequel les premier et second éléments étirés (13, 14) sont couplés en des positions mutuellement décalées dans une direction transversale à une direction (D) d'alignement mutuel des parties de base (21, 22), de sorte que chaque élément étiré (13, 14) a un sommet (23, 24) en saillie dans la direction opposée relative au sommet de l'autre élément étiré.

41. Procédé selon les revendications 39 ou 40, dans lequel le sommet (23, 24) d'un élément étiré (13, 14) est retourné contre une partie de base (21, 22) de l'autre élément étiré.

42. Procédé selon l'une quelconque des revendication 17 à 41, dans lequel l'application de chacun desdits premier et second éléments étirés (13, 14) comprend les étapes de :
- remplissage d'un élément étiré (13, 14) par un membre de remplissage (15, 16, 17) disposé de manière adjacente au support formant (18) pour appliquer ledit élément étiré sur le support lui-même ;
- imprimer au support formant (18) un mouvement rotatoire à distribution circonférentielle autour de l'axe de rotation géométrique (X), pour que l'élément étiré (13, 14) soit distribué circonférentiellement sur le support formant (18) ;
- mise en oeuvre contrôlée de déplacements relatifs de la distribution transversale entre le support formant (18) et le membre de remplissage (15, 16, 17) pour former lesdites bobines.

43. Procédé selon l'une quelconque des revendication 17 à 42, comprenant en outre l'étape d'application d'au moins un troisième composant (11) sur le support formant (18) avant une application dudit premier composant (8), ledit troisième composant (11) étant de matériau élastomère co-réticulable avec au moins ledit premier matériau élastomère.

44. Procédé selon l'une quelconque des revendication 17 à 43, comprenant en outre l'étape d'application d'un quatrième composant (12) après une application dudit second composant (9), ledit quatrième composant (12) étant de matériau élastomère co-réticulable avec au moins ledit second matériau élastomère.

45. Procédé selon l'une quelconque des revendication 17 à 44, dans lequel ledit premier matériau élastomère est co-réticulable avec la matrice élastomère de la structure de carcasse (2).

46. Appareil pour confectionner des pneumatiques pour roues de véhicule comprenant :
- des dispositifs pour former une structure de carcasse (2) comprenant des éléments de renfort de bande de roulement incorporés dans une matrice élastomère ;
- des dispositifs (31) pour associer des éléments structurels (28, 29, 30) d'un matériau élastomère avec ladite structure de carcasse (2) ;
- des dispositifs pour durcir le pneumatique,
dans lequel les dispositifs pour associer les éléments structurels (28, 29, 30) d'un matériau élastomère avec la structure de carcasse (2) comprennent au moins une unité (31) pour confectionner lesdits éléments structurels,
**caractérisé en ce que** ladite unité (31) comprend :
- des membres de remplissage (15, 16) pour fournir au moins un premier élément étiré (13) comprenant un premier rang de matériau élastomère et au moins un second élément étiré (14) comprenant un second rang de matériau élastomère ayant une composition différente de celle du premier matériau élastomère ;
- des membres (17, 25) pour appliquer lesdits premier et second éléments étirés (13, 14) sur le support formant (18) en bobines entourées autour d'un axe géométrique (X) dudit support formant (18) pour former un premier composant (8) dudit élément structurel (28, 29, 30) et un second composant (9) dudit élément structurel (28, 29, 30) superposé sur ledit premier composant (8), respectivement ;
et comprend en outre des dispositifs pour coupler mutuellement les premier et second composants étirés (13, 14) le long de leur extension longitudinale, pour former un élément en forme de bande continue (20), dans lequel les membres d'applications (17, 25) sont fournis pour enrouler ledit élément en forme de bande continue (20) autour de l'axe géométrique (X) dudit support formant (18) selon des bobines circonférentielles côtes à côtes, dans lequel un profil d'interface ondulé (10) est généré entre lesdits premier et second composants (8, 9), dans lequel ledit profil d'interface (10) définit des éléments à engagement mécanique (10a) entre les premier et second composants (8, 9).

47. Appareil selon la revendication 46, dans lequel ladite au moins une unité (31) pour confectionner des éléments structurels est dédiée à la confection de bandes de roulement en une position radialement externe à la structure de carcasse (2).

48. Appareil selon l'une des revendications 46 à 47, comprenant en outre des dispositifs pour fabriquer au moins une couche de ceinture (7a, 7b) et des dispositifs pour associer ladite au moins une couche de ceinture (7a, 7b) avec la structure de carcasse (2) en une position radialement externe, dans lequel ladite au moins une unité (31) pour confectionner des éléments structurels est dédiée à la confection de bandes de roulement (28) en une position radialement externe à ladite au moins un couche de ceinture.

49. Appareil selon l'une quelconque des revendications 46 à 48, dans lequel ladite au moins une unité (31) pour confectionner des éléments structurels est dédiée à la confection de flancs latéraux (29) disposés latéralement contre la structure de carcasse (2).

50. Appareil selon l'une quelconque des revendications 46 à 48, dans lequel ladite au moins une unité (31) pour confectionner des éléments structurels est dédiée à la confection d'inserts auxiliaires de support (30) pour association avec la structure de carcasse (2).

51. Appareil selon l'une quelconque des revendications 46 à 50, dans lequel ladite au moins une unité (31) pour confectionner des éléments structurels comprend :
- un premier membre de remplissage (15) positionné pour remplir le premier élément étiré (13) ;
- un second membre de remplissage (16) positionné pour remplir le second élément étiré (14) ;
- des dispositifs (17, 25) pour guider les premier et second éléments étirés (13, 14) selon des directions mutuellement convergentes vers un point de couplage mutuel.

52. Appareil selon la revendication 51, dans lequel le point de couplage mutuel entre les éléments étirés (13, 14) est placé sur le support formant (18).

53. Appareil selon la revendication 51, dans lequel le point de couplage mutuel entre les éléments étirés (13, 14) est placé en amont du support formant (18).

54. Appareil selon la revendication 51, dans lequel les dispositifs de guidages transportent les premier et second éléments étirés (13, 14) sur le support formant (18) en des points (A, B) mutuellement espacés selon une direction circonférentielle.

55. Appareil selon l'une quelconque des revendications 51 à 54, dans lequel lesdits premier et second membres de remplissage comprennent respectivement des première et secondes extrudeuses (15, 16).

56. Appareil selon l'une quelconque des revendications 46 à 50, dans lequel ladite au moins une unité (31) pour confectionner des éléments structurels (28, 29, 30) comprend au moins une extrudeuse (26) pour coextruder les premier et second éléments étirés (13, 14) pour confectionner ledit élément en forme de bande continue (20).

57. Appareil selon l'une quelconque des revendications 46 à 56, dans lequel ladite au moins une unité (31) pour confectionner des éléments structurels (28, 29, 30) comprend :
- au moins un membre de remplissage (15, 16, 17) disposé de manière adjacente au support formant (18) pour appliquer au moins un desdits éléments étirés (13, 14) sur le support lui-même ;
- des dispositifs de mise en mouvement rotatoire pour imprimer au support formant (18) un mouvement rotatoire à distribution circonférentielle autour de l'axe de rotation géométrique (X), pour que l'élément étiré (13, 14) soit distribué circonférentiellement sur le support formant (18) ;
- des dispositifs de mise en mouvement de translation pour mettre en oeuvre des déplacements relatifs contrôlés de la distribution transversale entre le support formant (18) et le membre de remplissage (15, 16, 17) pour former lesdites bobines.

58. Appareil selon l'une quelconque des revendications 46 à 57, dans lequel, ladite au moins une unité (31) pour confectionner des éléments structurels (28, 29, 30) comprend en outre des dispositifs pour appliquer sur le support formant (18) au moins un troisième composant (11) de matériau élastomère co-réticulable avec au moins ledit premier matériau élastomère.

59. Appareil selon l'une quelconque des revendications 46 à 58, dans lequel, ladite au moins une unité (31) pour confectionner des éléments structurels (28, 29, 30) comprend en outre des dispositifs pour appliquer sur le support formant (18) au moins un quatrième composant (12) de matériau élastomère co-réticulable avec au moins ledit second matériau élastomère.
